# EUROPEAN PATENT SPECIFICATION

(11) **EP 4 161 110 B1**
(45) Date of publication and mention of the grant of the patent: **09.09.2026**
(21) Application number: 22197932.1
(22) Date of filing: 27.09.2022
(51) Int. Cl.: H04W 4/40, H04W 4/02, G01C 21/34, H04W 4/029, H04L 67/52, G08G 5/00, H04B 7/185

(54) **METHOD, APPARATUS AND COMPUTER PROGRAM**
VERFAHREN, VORRICHTUNG UND COMPUTERPROGRAMM
PROCÉDÉ, APPAREIL ET PROGRAMME INFORMATIQUE

(30) Priority: 30.09.2021 IN 202141044409
(43) Date of publication of application: 05.04.2023
(73) Proprietor: Nokia Technologies Oy, 02610 Espoo (FI)
(72) Inventor: GUPTA, Pallab, 560087 Bangalore (IN); KHARE, Saurabh, 560005 Bangalore (IN); KOVÁCS, István, Zsolt, 9000 Aalborg (DK); KUNZMANN, Gerald, 81541 Munich (DE); LAIR, Yannick, 78960 Voisins le Bretonneux (FR); SAMDANIS, Konstantinos, 81927 Munich (DE); JERICHOW, Anja, 85567 Grafing bei München (DE)
(74) Representative: Nokia EPO representatives

(56) References cited:
- WO-A1-2016/150494
- WO-A1-2020/233975
- US-A1- 2020 112 907
- US-A1- 2021 101 679
- US-A1- 2021 297 921

## Description

### FIELD

The present application relates to a method, apparatus, and computer program and in particular but not exclusively to selecting a vehicle movement path.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Document US2021/101679A1 discloses that QoS requirements of a vehicle (e.g. UAV) along a movement path (e.g. flight route) is predicted by a analytics function network entity (e.g. NWDAF) upon a request from a vehicle management entity (e.g. UTM) and the flight path fulfilling the QoS requirements is communicated to the vehicle management entity. Document US2020/112907A1 discloses predicting QoS parameters on a travel route of a vehicle. Documents WO2020/233975A1, WO2016/150494A1 and US2021/297921A1 disclose QoS prediction on a travel path of a vehicle.

### SUMMARY

According to an aspect, there is provided an apparatus comprising means for sending, to an analytics function, a request for a service quality prediction along at least one movement path of a vehicle; receiving, from the analytics function, information indicating at least one predicted service quality for the vehicle along the at least one movement path; and selecting, based on the received information, a vehicle movement path.

The at least one movement path may consist of a first movement path, and wherein the selecting comprises selecting the first movement path as the vehicle movement path.

The at least one movement path may comprise a plurality of movement paths, and the selecting may comprise selecting the vehicle movement path from the plurality of movement paths.

The request may comprise information indicating one or more of: the at least one movement path of the vehicle; minimum service requirements for the vehicle; timing information indicating a scheduled time for the vehicle to move along the at least one movement path; one or more expected response parameters; that the movement paths can be further split into a plurality of smaller movement paths; the mode of operation among a group of vehicles including the vehicle; and one or more services that the vehicle is enabled to use.

The request may comprise information indicating that the at least one movement path can be further split into a plurality of smaller movement paths, and wherein the information indicating the predicted service quality comprises information indicating a predicted service quality along the plurality of smaller movement paths.

The minimum service requirements may comprise at least one of a minimum quality of service requirement and a minimum service reliability requirement.

The information indicating the at least one predicted service quality for the vehicle may comprise one or more of: an indication of whether a required service quality can be met for the at least one movement path; information indicating at least one of the at least one movement path along which the required service quality can be met; a predicted service quality change for at least a segment of one of the at least one movement path; an indication that the required service quality cannot be met for at least a segment of one of the at least one movement path; information indicating adjustments to one or more of the at least one movement path such that a required service quality can be met.

The means may be for: sending, to the analytics function, a subscription request for updated service quality information for the vehicle along the selected vehicle movement path; and receiving, from the analytics function, updated service quality information based on the subscription request.

The means may be for: adjusting the vehicle movement path based on the updated service quality information.

The analytics function may be a network data analytics function or a management data analytics service.

The apparatus may be a or may be implemented in a management network function configured to manage a vehicle . The management function may be USS/UTM. The analytics function may be a NWDAF or MDAS.

According to an aspect, there is provided an apparatus comprising means for: receiving, from a management function configured to manage a vehicle, a request for a service quality prediction along at least one movement path of a vehicle; determining a predicted service quality for the vehicle along the at least one movement path; and sending, to the management function, information indicating the predicted service quality for the vehicle along the at least one movement path.

The request may comprise information indicating one or more of: the at least one movement path of the vehicle; minimum service requirements for the vehicle; timing information indicating a scheduled time for the vehicle to move along the at least one movement path; one or more expected response parameters; that the at least one movement path can be further split into a plurality of smaller movement paths; the mode of operation among a group of vehicles including the vehicle; and one or more services that the vehicle is enabled to use.

The minimum service requirements may comprise at least one of a minimum quality of service requirement and a minimum service reliability requirement.

The request may comprise information indicating that the at least one movement path can be further split into a plurality of smaller movement paths, and the means may be for: splitting the at least one movement path into the plurality of smaller movement paths, and wherein the information indicating the predicted service quality may comprise information indicating a predicted service quality along the plurality of smaller movement paths.

The means may be for: collecting one or more inputs from one or more network nodes, wherein the determining is based on the one or more collected inputs.

The one or more network nodes may be determined based on the at least one movement path of the vehicle.

The one or more inputs may comprise one or more of: policy information associated with the vehicle; load information associated with the one or more network nodes; information indicating one or more vehicle conditions; radio coverage information along the at least one propsed movement path of the vehicle; event information associated with the one or more network nodes; measurement information obtained by the one or more network nodes; mobility information along the at least one movement path of the vehicle; network topology information; and radio connectivity information associated with a height of the vehicle.

The information indicating the predicted service quality for the vehicle may comprise one or more of: an indication of whether a required service quality can be met for the at least one movement path; information indicating at least one of the at least one movement path along which the required service quality can be met; a predicted service quality change for at least a segment of one of the at least one movement path; and an indication that the required service quality cannot be met for at least a segment of one of the at least one movement path.

The means may be for: receiving, from the management function, a subscription request for updated service quality information for the vehicle along a selected movement path; and sending, to the analytics function, updated service quality information based on the subscription request.

The management function may comprise an unmanned aerial vehicle service supplier function or unmanned aerial vehicle traffic management function.

The apparatus may be a or may be implemented in an analytics function. The management function may be USS/UTM. The analytics function may be a NWDAF or MDAS.

According to an aspect, there is provided an apparatus comprising at least one processor and at least one memory including a computer program code, the at least one memory and computer program code configured to, with the at least one processor, cause the apparatus at least to: send, to an analytics function, a request for a service quality prediction along at least one movement path of a vehicle; receive, from the analytics function, information indicating at least one predicted service quality for the vehicle along the at least one movement path; and select, based on the received information, a vehicle movement path.

The at least one movement path may consist of a first movement path, and the at least one memory and at least one processor may be configured to cause the apparatus to select the first movement path as the vehicle movement path.

The at least one movement path may comprise a plurality of movement paths, and the at least one memory and at least one processor may be configured to cause the apparatus to select the vehicle movement path from the plurality of movement paths.

The request may comprise information indicating one or more of: the at least one movement path of the vehicle; minimum service requirements for the vehicle; timing information indicating a scheduled time for the vehicle to move along the at least one movement path; one or more expected response parameters; that the movement paths can be further split into a plurality of smaller movement paths; the mode of operation among a group of vehicles including the vehicle; and one or more services that the vehicle is enabled to use.

The request may comprise information indicating that the at least one movement path can be further split into a plurality of smaller movement paths, and wherein the information indicating the predicted service quality comprises information indicating a predicted service quality along the plurality of smaller movement paths.

The minimum service requirements may comprise at least one of a minimum quality of service requirement and a minimum service reliability requirement.

The information indicating the at least one predicted service quality for the vehicle may comprise one or more of: an indication of whether a required service quality can be met for the at least one movement path; information indicating at least one of the at least one movement path along which the required service quality can be met; a predicted service quality change for at least a segment of one of the at least one movement path; an indication that the required service quality cannot be met for at least a segment of one of the at least one movement path; information indicating adjustments to one or more of the at least one movement path such that a required service quality can be met.

The at least one memory and at least one processor may be configured to cause the apparatus to: send, to the analytics function, a subscription request for updated service quality information for the vehicle along the selected vehicle movement path; and receive, from the analytics function, updated service quality information based on the subscription request.

The at least one memory and at least one processor may be configured to cause the apparatus to adjust the vehicle movement path based on the updated service quality information.

The analytics function may be a network data analytics function or a management data analytics service.

The apparatus may be a or may be implemented in a management network function configured to manage a vehicle . The management function may be USS/UTM. The analytics function may be a NWDAF or MDAS.

According to an aspect, there is provided an apparatus comprising at least one processor and at least one memory including a computer program code, the at least one memory and computer program code configured to, with the at least one processor, cause the apparatus at least to: receive, from a management function configured to manage a vehicle, a request for a service quality prediction along at least one movement path of a vehicle; determine a predicted service quality for the vehicle along the at least one movement path; and send, to the management function, information indicating the predicted service quality for the vehicle along the at least one movement path.

The request may comprise information indicating one or more of: the at least one movement path of the vehicle; minimum service requirements for the vehicle; timing information indicating a scheduled time for the vehicle to move along the at least one movement path; one or more expected response parameters; that the at least one movement path can be further split into a plurality of smaller movement paths; the mode of operation among a group of vehicles including the vehicle; and one or more services that the vehicle is enabled to use.

The minimum service requirements may comprise at least one of a minimum quality of service requirement and a minimum service reliability requirement.

The request may comprise information indicating that the at least one movement path can be further split into a plurality of smaller movement paths, and the at least one memory and at least one processor may be configured to cause the apparatus to: split the at least one movement path into the plurality of smaller movement paths, and wherein the information indicating the predicted service quality may comprise information indicating a predicted service quality along the plurality of smaller movement paths.

The at least one memory and at least one processor may be configured to cause the apparatus to: collect one or more inputs from one or more network nodes, wherein the at least one memory and at least one processor may be configured to cause the apparatus to determine the predicted service quality based on the one or more collected inputs.

The one or more network nodes may be determined based on the at least one movement path of the vehicle.

The one or more inputs may comprise one or more of: policy information associated with the vehicle; load information associated with the one or more network nodes; information indicating one or more vehicle conditions; radio coverage information along the at least one propsed movement path of the vehicle; event information associated with the one or more network nodes; measurement information obtained by the one or more network nodes; mobility information along the at least one movement path of the vehicle; network topology information; and radio connectivity information associated with a height of the vehicle.

The information indicating the predicted service quality for the vehicle may comprise one or more of: an indication of whether a required service quality can be met for the at least one movement path; information indicating at least one of the at least one movement path along which the required service quality can be met; a predicted service quality change for at least a segment of one of the at least one movement path; and an indication that the required service quality cannot be met for at least a segment of one of the at least one movement path.

The at least one memory and at least one processor may be configured to cause the apparatus to: receive, from the management function, a subscription request for updated service quality information for the vehicle along a selected movement path; and send, to the analytics function, updated service quality information based on the subscription request.

The management function may comprise an unmanned aerial vehicle service supplier function or unmanned aerial vehicle traffic management function.

The apparatus may be a or may be implemented in an analytics function. The management function may be USS/UTM. The analytics function may be a NWDAF or MDAS.

According to an aspect, there is provided a method comprising: sending, to an analytics function, a request for a service quality prediction along at least one movement path of a vehicle; receiving, from the analytics function, information indicating at least one predicted service quality for the vehicle along the at least one movement path; and selecting, based on the received information, a vehicle movement path.

The at least one movement path may consist of a first movement path, and wherein the selecting comprises selecting the first movement path as the vehicle movement path.

The at least one movement path may comprise a plurality of movement paths, and the selecting may comprise selecting the vehicle movement path from the plurality of movement paths.

The request may comprise information indicating one or more of: the at least one movement path of the vehicle; minimum service requirements for the vehicle; timing information indicating a scheduled time for the vehicle to move along the at least one movement path; one or more expected response parameters; that the movement paths can be further split into a plurality of smaller movement paths; the mode of operation among a group of vehicles including the vehicle; and one or more services that the vehicle is enabled to use.

The request may comprise information indicating that the at least one movement path can be further split into a plurality of smaller movement paths, and wherein the information indicating the predicted service quality comprises information indicating a predicted service quality along the plurality of smaller movement paths.

The minimum service requirements may comprise at least one of a minimum quality of service requirement and a minimum service reliability requirement.

The information indicating the at least one predicted service quality for the vehicle may comprise one or more of: an indication of whether a required service quality can be met for the at least one movement path; information indicating at least one of the at least one movement path along which the required service quality can be met; a predicted service quality change for at least a segment of one of the at least one movement path; an indication that the required service quality cannot be met for at least a segment of one of the at least one movement path; information indicating adjustments to one or more of the at least one movement path such that a required service quality can be met.

The method may comprise: sending, to the analytics function, a subscription request for updated service quality information for the vehicle along the selected vehicle movement path; and receiving, from the analytics function, updated service quality information based on the subscription request.

The method may comprise: adjusting the vehicle movement path based on the updated service quality information.

The analytics function may be a network data analytics function or a management data analytics service.

According to an aspect, there is provided a method comprising: receiving, from a management function configured to manage a vehicle, a request for a service quality prediction along at least one movement path of a vehicle; determining a predicted service quality for the vehicle along the at least one movement path; and sending, to the management function, information indicating the predicted service quality for the vehicle along the at least one movement path.

The request may comprise information indicating one or more of: the at least one movement path of the vehicle; minimum service requirements for the vehicle; timing information indicating a scheduled time for the vehicle to move along the at least one movement path; one or more expected response parameters; that the at least one movement path can be further split into a plurality of smaller movement paths; the mode of operation among a group of vehicles including the vehicle; and one or more services that the vehicle is enabled to use.

The minimum service requirements may comprise at least one of a minimum quality of service requirement and a minimum service reliability requirement.

The request may comprise information indicating that the at least one movement path can be further split into a plurality of smaller movement paths, and the method may comprise: splitting the at least one movement path into the plurality of smaller movement paths, and wherein the information indicating the predicted service quality may comprise information indicating a predicted service quality along the plurality of smaller movement paths.

The method may comprise: collecting one or more inputs from one or more network nodes, wherein the determining is based on the one or more collected inputs.

The one or more network nodes may be determined based on the at least one movement path of the vehicle.

The one or more inputs may comprise one or more of: policy information associated with the vehicle; load information associated with the one or more network nodes; information indicating one or more vehicle conditions; radio coverage information along the at least one propsed movement path of the vehicle; event information associated with the one or more network nodes; measurement information obtained by the one or more network nodes; mobility information along the at least one movement path of the vehicle; network topology information; and radio connectivity information associated with a height of the vehicle.

The information indicating the predicted service quality for the vehicle may comprise one or more of: an indication of whether a required service quality can be met for the at least one movement path; information indicating at least one of the at least one movement path along which the required service quality can be met; a predicted service quality change for at least a segment of one of the at least one movement path; and an indication that the required service quality cannot be met for at least a segment of one of the at least one movement path.

The method may comprise: receiving, from the management function, a subscription request for updated service quality information for the vehicle along a selected movement path; and sending, to the analytics function, updated service quality information based on the subscription request.

The management function may comprise an unmanned aerial vehicle service supplier function or unmanned aerial vehicle traffic management function.

According to an aspect, there is provided a computer readable medium comprising program instructions for causing an apparatus to perform at least the following: sending, to an analytics function, a request for a service quality prediction along at least one movement path of a vehicle; receiving, from the analytics function, information indicating at least one predicted service quality for the vehicle along the at least one movement path; and selecting, based on the received information, a vehicle movement path.

The at least one movement path may consist of a first movement path, and wherein the selecting comprises selecting the first movement path as the vehicle movement path.

The at least one movement path may comprise a plurality of movement paths, and the selecting may comprise selecting the vehicle movement path from the plurality of movement paths.

The request may comprise information indicating one or more of: the at least one movement path of the vehicle; minimum service requirements for the vehicle; timing information indicating a scheduled time for the vehicle to move along the at least one movement path; one or more expected response parameters; that the movement paths can be further split into a plurality of smaller movement paths; the mode of operation among a group of vehicles including the vehicle; and one or more services that the vehicle is enabled to use.

The request may comprise information indicating that the at least one movement path can be further split into a plurality of smaller movement paths, and wherein the information indicating the predicted service quality comprises information indicating a predicted service quality along the plurality of smaller movement paths.

The minimum service requirements may comprise at least one of a minimum quality of service requirement and a minimum service reliability requirement.

The information indicating the at least one predicted service quality for the vehicle may comprise one or more of: an indication of whether a required service quality can be met for the at least one movement path; information indicating at least one of the at least one movement path along which the required service quality can be met; a predicted service quality change for at least a segment of one of the at least one movement path; an indication that the required service quality cannot be met for at least a segment of one of the at least one movement path; information indicating adjustments to one or more of the at least one movement path such that a required service quality can be met.

The computer readable medium may comprise program instructions for causing the apparatus to perform: sending, to the analytics function, a subscription request for updated service quality information for the vehicle along the selected vehicle movement path; and receiving, from the analytics function, updated service quality information based on the subscription request.

The computer readable medium may comprise program instructions for causing the apparatus to perform: adjusting the vehicle movement path based on the updated service quality information.

The analytics function may be a network data analytics function or a management data analytics service.

According to an aspect, there is provided a computer readable medium comprising program instructions for causing an apparatus to perform at least the following: receiving, from a management function configured to manage a vehicle, a request for a service quality prediction along at least one movement path of a vehicle; determining a predicted service quality for the vehicle along the at least one movement path; and sending, to the management function, information indicating the predicted service quality for the vehicle along the at least one movement path.

The request may comprise information indicating one or more of: the at least one movement path of the vehicle; minimum service requirements for the vehicle; timing information indicating a scheduled time for the vehicle to move along the at least one movement path; one or more expected response parameters; that the at least one movement path can be further split into a plurality of smaller movement paths; the mode of operation among a group of vehicles including the vehicle; and one or more services that the vehicle is enabled to use.

The minimum service requirements may comprise at least one of a minimum quality of service requirement and a minimum service reliability requirement.

The request may comprise information indicating that the at least one movement path can be further split into a plurality of smaller movement paths, and the computer readable medium may comprise program instructions for causing the apparatus to perform: splitting the at least one movement path into the plurality of smaller movement paths, and wherein the information indicating the predicted service quality may comprise information indicating a predicted service quality along the plurality of smaller movement paths.

The computer readable medium may comprise program instructions for causing the apparatus to perform:: collecting one or more inputs from one or more network nodes, wherein the determining is based on the one or more collected inputs.

The one or more network nodes may be determined based on the at least one movement path of the vehicle.

The one or more inputs may comprise one or more of: policy information associated with the vehicle; load information associated with the one or more network nodes; information indicating one or more vehicle conditions; radio coverage information along the at least one propsed movement path of the vehicle; event information associated with the one or more network nodes; measurement information obtained by the one or more network nodes; mobility information along the at least one movement path of the vehicle; network topology information; and radio connectivity information associated with a height of the vehicle.

The information indicating the predicted service quality for the vehicle may comprise one or more of: an indication of whether a required service quality can be met for the at least one movement path; information indicating at least one of the at least one movement path along which the required service quality can be met; a predicted service quality change for at least a segment of one of the at least one movement path; and an indication that the required service quality cannot be met for at least a segment of one of the at least one movement path. The computer readable medium may comprise program instructions for causing the apparatus to perform: receiving, from the management function, a subscription request for updated service quality information for the vehicle along a selected movement path; and sending, to the analytics function, updated service quality information based on the subscription request. The management function may comprise an unmanned aerial vehicle service supplier function or unmanned aerial vehicle traffic management function.

According to an aspect, there is provided a non-transitory computer readable medium comprising program instructions for causing an apparatus to perform at least the method according to any of the preceding aspects.

In the above, many different embodiments have been described. It should be appreciated that further embodiments may be provided by the combination of any two or more of the embodiments described above. The invention is defined in the appended claims.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 shows a method according to some examples;
Figure 5 shows an illustration of different flight paths or corridors for a UAV according to some examples; and
Figure 6 shows a signalling exchange according to some examples.

### DETAILED DESCRIPTION

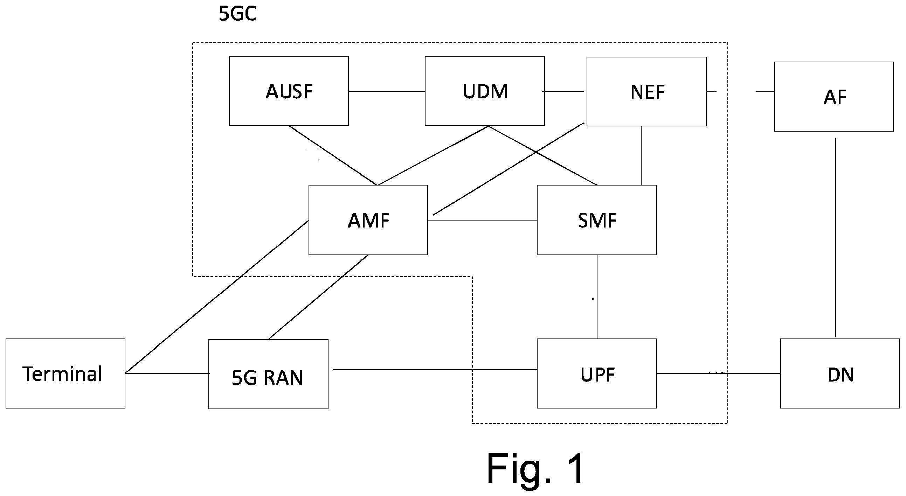

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may be comprised by a terminal or user equipment (UE), a 5G radio access network (5GRAN) or next generation radio access network (NG-RAN), a 5G core network (5GC), one or more application function (AF) and one or more data networks (DN).

The 5G-RAN may comprise one or more gNodeB (GNB) or one or more gNodeB (GNB) distributed unit functions connected to one or more gNodeB (GNB) centralized unit functions. The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF).

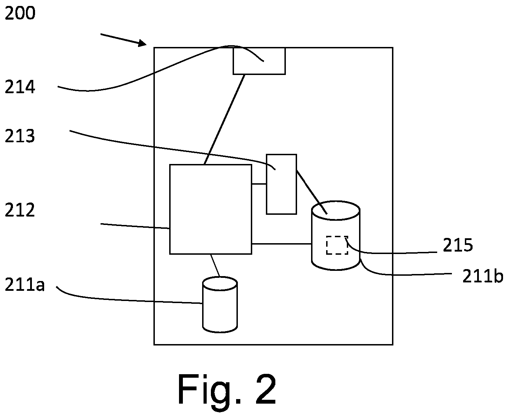

Figure 2 illustrates an example of a control apparatus 200 for controlling a function of the 5GRAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GC. In some embodiments, each function of the 5GRAN or the 5GC comprises a control apparatus 200. In alternative embodiments, two or more functions of the 5GRAN or the 5GC may share a control apparatus.

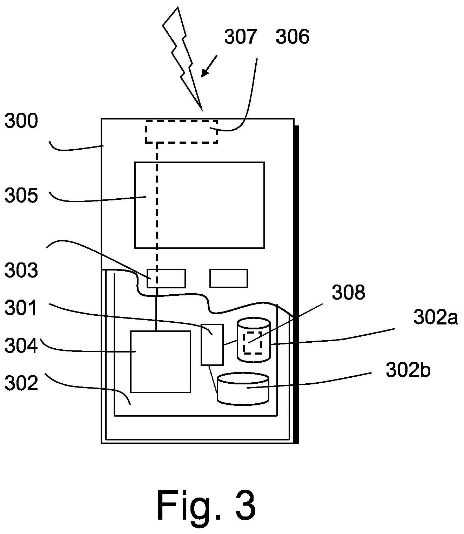

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

Certain 3GPP architecture enhancements may support Uncrewed or Unmanned Aerial Systems (UAS) connectivity, identification, and tracking. A UAS is the combination of an Unmanned Aerial Vehicle (UAV), sometimes called a drone, and a UAV controller.

A UAV is an aircraft without a human pilot onboard. The UAV can be controlled from an operator via a UAV controller, and may have a range of autonomous flight capabilities. The 3GPP system may provide the communication system between the UAV and UAV controller.

UAVs may range in size and weight from small, light aircraft (which may for example be used for recreational purposes) to large, heavy aircraft (which may for example be suited to commercial applications).

The communication requirements for UAS may include both the Command and Control (C2), and uplink and downlink data to/from the UAS components towards both the serving 3GPP network and network servers.

Unmanned Aerial System Traffic Management system (UTM) may provide a number of services to support UAS and their operations, including but not limited to UAS identification and tracking, authorisation, enforcement, regulation of UAS operations, and also to store data used to enable UAS operation. The UTM may allow authorised users (e.g., air traffic control, public safety agencies) to query the identity and metadata of a UAV and its UAV controller

At the aviation level, an UAV may be identified by civil Aviation Authority (CAA)-Level UAV ID. The CAA-Level UAV ID may be assigned by USS/UTM, and may identify a UAV at least within the scope of a UAS Service Supplier (USS).

At 3GPP level, a UE that is used with an UAV (hereafter referred to as an aerial UE) may be identified using an aerial indication at the subscription level. The aerial UE may for example be a UAV or a UAV controller.

In addition to normal UE authentication/authorization procedures, the 3GPP system may also perform authentication/authorization of the UAV identity (for example using the CAA-Level UAV ID). This authentication/authorization may be performed by the USS/UTM. Authentication/authorization of the aerial UE may have to be successful before allowing any services to the aerial UE in the network.

The authentication/authorization of the CAA-Level UAV ID may be performed at 5GS Registration or during PDU session establishment. A UE used in the UAV may include the CAA-Level UAV ID of the UAV in Registration request and in a PDU session establishment request. Mechanisms for UAV flight path authorization and C2 pairing may be performed by the USS/UTM during PDU session establishment.

When a UAS is using cellular connectivity for critical communication like Command & Control (C2) and Networked Remote Identification (NRID), it may be important to ensure continuous connectivity and a certain level of service quality throughout the flight path of the UAV.

Flight path authorization may be performed by the USS/UTM systems, for example based on information received (on request) from the 3GPP MNO(s).

In some cases, it may be important for the USS/UTM to know if a minimum required service quality can be ensured throughout the intended flight path when it performs flight path authorization for a UAV.

When the UAV has already started a flight mission on an approved flight path, the USS/UTM may also need to be informed if service quality cannot be met (for example if there is no QoS sustainability, at any specific upcoming flight path segment within the target flight time duration) so that the USS/UTM could then take necessary actions for example, alter the flight path of the UAV (in direction and/or height) or alter the speed of the UAV, so the UAV may reach upcoming cells in the calculated flight path segment at different points in time, where QoS sustainability can be assured.

Flight path information may be represented in the form of waypoints defined as 3D locations. It may not be feasible for the USS/UTM or any other system to manually pre-configure whether a specific level of service quality can be assured throughout the flight path intended by a UAV.

The USS/UTM (or any other entity responsible for flight path authorization and monitoring) may query a Public Land Mobile Network (PLMN) serving the aerial UE. The USS/UTM may check the quality of the cellular connection throughout the flight, for example along the geographical flight path and/or during the predicted time passing each segment of the flight path. There may be multiple paths available to reach the same destination and, in that case, the USS/UTM may provide a list of all possible flight paths or flight corridors to the 5GS and check if one or more of the available flight paths has minimum required cellular service quality from the PLMN.

Additionally, by controlling the height of a UAV, more cellular connectivity options may be available, thereby enriching the selection of connectivity points that may assure the minimum service quality.

Furthermore, the USS/UTM may provide a new time schedule for the original flight path, controlling the time where a UAV would use certain cellular resources in order to assure minimum service quality.

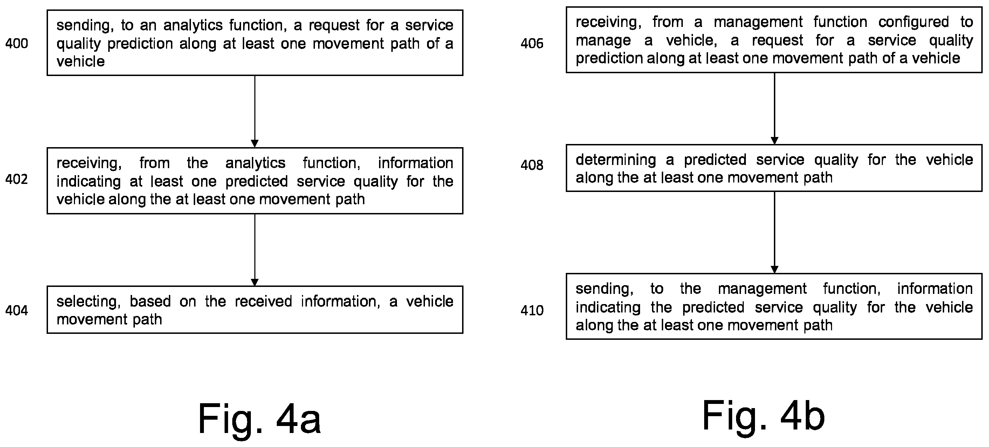

Reference is made to Figure 4, which shows a method according to some examples.

As shown in Figure 4a, at 400, the method may comprise sending, to an analytics function, a request for a service quality prediction along at least one movement path of a vehicle.

At 402, the method may comprise receiving, from the analytics function, information indicating at least one predicted service quality for the vehicle along the at least one movement path.

At 404, the method may comprise selecting, based on the received information, a vehicle movement path.

In some examples, the method of Figure 4a may be implemented by a USS/UTM or by an apparatus configured to provide a USS/UTM.

As shown in Figure 4b, at 406, the method may comprise receiving, from a management function configured to manage a vehicle, a request for a service quality prediction along at least one movement path of a vehicle.

At 408, the method may comprise determining a predicted service quality for the vehicle along the at least one movement path.

At 410, the method may comprise sending, to the management function, information indicating the predicted service quality for the vehicle along the at least one movement path.

In some examples, the method of Figure 4b may be implemented by an analytics function (such as a NWDAF or MDAS), or by an apparatus configured to provide an analytics function.

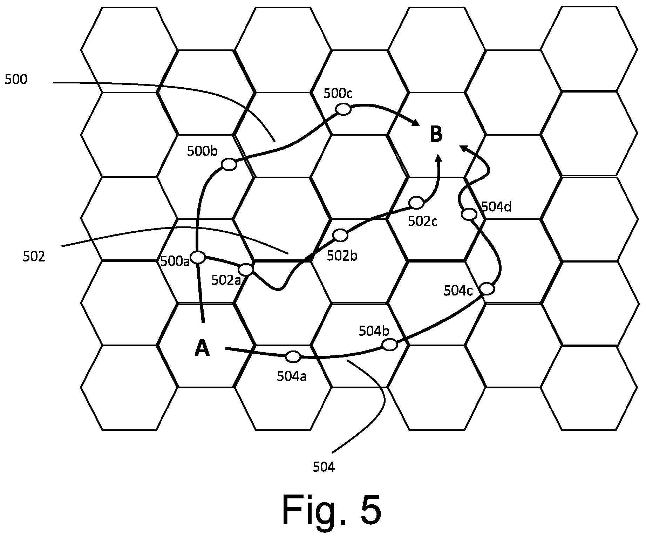

Reference is made to Figure 5, which shows an illustration of different flight paths or corridors for a UAV.

In the example of Figure 5, three different flight paths or corridors 500, 502, 504 are shown between points A and B. Each flight path may be represented in 4D, which contains the 3D waypoints and estimated time of the UAV passing by the 3D waypoint.

In the example of Figure 5, flight path 500 has three waypoints 500a, 500b, and 500c; flight path 502 has three waypoints 502a, 502b, and 502c; and flight path 504 has four waypoints 504a, 504b, 504c, and 504d.

A segment between two consecutive 3D waypoints may be referred to as a "flight path segment". Thus, for example, the flight path 500 may comprise four flight path segments - between A and 500a, 500a and 500b, 500b and 500c, and 500c and B.

As shown in Figure 5, there may be multiple paths available for a UAV to travel from point A to point B. When there are well defined flight corridors available, a flight path can be changed only at some intersections of those flight corridors. Such intersection points may be referred to as a flight corridor cross-junction. In the example of Figure 5, point 500a is such a junction, where the flight corridors 500 and 502 intersect. If the UAV is travelling along corridor 500 (or 502), then at point 500a the UAV may change flight path to move along corridor 502 (or 500).

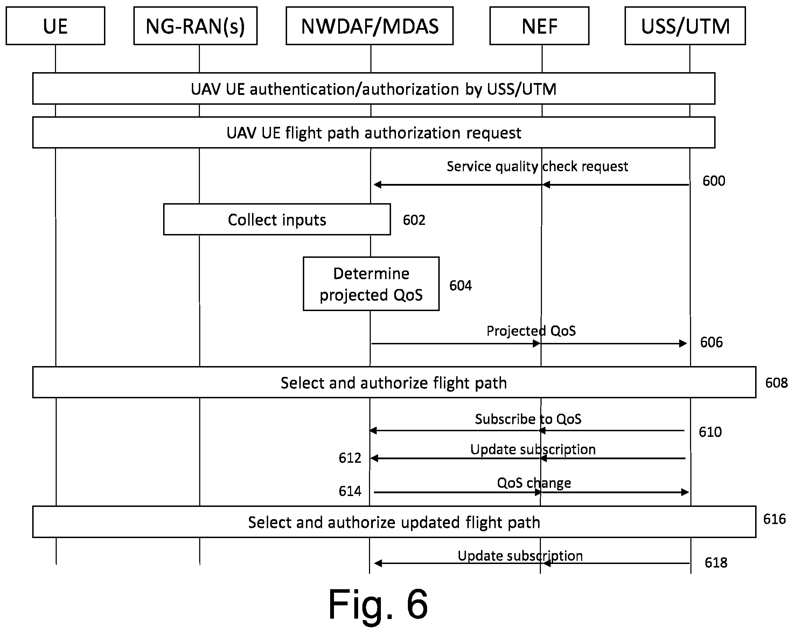

Reference is made to Figure 6, which shows a signalling exchange according to some examples.

In the example of Figure 6, a USS/UTM acts as an external application function. The USS/UTM may access 3GPP exposed services using a public identifier of the aerial UE.

In some examples, a UAV authentication/authorization procedure may be performed. The UAV may be authenticated during PDU session establishment (or optionally at 5GS registration) by USS/UTM. The 3GPP system may provide public identifiers (e.g. GPSI, IP address) of the aerial UE to the USS/UTM. The USS/UTM may then use the public identifier of the UE to access 3GPP exposed services.

In other examples, a UAV authentication/authorization procedure may not be performed. The UAS operator may provide the serving mobile network operator information and the public identifier (e.g. GPSI) of the aerial UE to the USS/UTM. The USS/UTM may then use the public identifier of the UE to access 3GPP exposed services.

In some examples, the aerial UE may send a flight path authorization request to the USS/UTM. The USS/UTM may then send a service quality check request to the analytics function/analytics service, such as NWDAF or MDAS (via NEF). The service quality check request is to verify if the network can provide acceptable level of connectivity service throughout at least one proposed flight path. A new analytics ID (=Service Quality Prediction along a flight corridor) may be exposed by the analytics function/service via the NEF for this purpose.

The USS/UTM sending a service quality check request to the analytics function/service is shown in step 600 in Figure 6.

In some examples, the service quality check request may contain one or more of the following:
- Information indicating a flight path of the UAV, or a list of flight paths of the UAV, or a flight corridor of the UAV, or a list of flight corridors of the UAV. As used herein, the term flight path is used to encompass both the flight path of the UAV (i.e. the vector along which the UAV travels) as well as the flight corridor of the UAV (i.e. the region of space or window of time within which the fligt path may be contained);
- Information indicating minimum requirements, such as a minimum required QoS, minimum required reliability level etc.;
- Information indicating one or more expected response parameters - for example, only a YES/NO answer for each flight path or flight corridor, a detailed report including information indicating on which flight path(s) or flight corridor(s) the minimum requirement(s) can be met, a projected QoS score for a path or corridor per path/corridor segment (the flight path or flight corridor being divided into a plurality of smaller flight path/flight corridor segments, where for example each segment is defined with the corresponding 3D waypoints and the start and stop UTC time stamps);

- Information indicating which service the UAV may use, for example DNN, S-NSSAI, PDU Session etc.;
- Information indicating a tolerance (e.g. a maximum time period) for which the required service quality can be missed; and
- Information indicating whether the analytics function is allowed to split the flight path(s) into smaller/more fine granular flight path(s).

The information that describes the flight path may include information indicating one or more of the following:
- A flight corridor in time: for example, one or more of a 3D way point, acceptable deviation per 3D way point, acceptable flight time range per way point;
- An intersection of 3D way points across flight corridors, which may let the network know when a flight path can be changed (assuming the existence of flight corridors, a flight path may not change at any point in time unless a UAV reaches an intersection of flight corridors);
- Minimum required QoS: such as one or more of a round trip delay, jitter, connectivity disruption tolerance in time, positioning support, UL/DL throughput;
- Minimum required reliability level: such as probability of signal level to be below a certain threshold, or probability of packet errors in UL/DL;
- Target: including a UE, group of UEs, and/or any UE;
- A mode of operation among a group of UAVs: for example collaborative (indicating the root UAV that can reach and provide connectivity for the others), non-collaborative (which may serve as a flag to indicate that a group of UAVs can be divided in any possible way and may use different flight paths that assure the desired minimum QoS); and
- Scheduled flight time (for example start time and end time) and acceptable deviations. In some examples, the flight time may be given in UTC time.

At step 602, the analytics function collects inputs for determining the service quality prediction.

In some examples, the analytics function may collect one or more inputs. In some examples, the one or more inputs may be collected from one or more RAN nodes, 5GC nodes and/or the OAM. The plurality of RAN nodes and/or 5GC nodes may cover one or more flight paths of the UAV.

The analytics function may also collect historical data relating to the plurality of RAN nodes and/or 5GC nodes, if historical data is available. For example, the historical data may be collected from an ADRF.

The analytics function may then calculate projected QoS, and optionally reliability, along the indicated flight path(s)/flight corridor(s) of the UAV, based on the collected inputs.

The analytics function may also split flight corridor(s) into smaller corridors (in location and/or time) based on the inputs. For example, the analytics function may split the flight corridors when an increased service quality can be predicted for such smaller corridor(s). In some examples, the requested flight corridor(s) are relatively wide (e.g. being hundreds of meters wide and served by multiple cells, or spanning a long time window covering both rush hours and non-peak hours), and thus splitting the corridor into smaller corridors may provide improved QoS projection accuracy. Alternatively, the analytics function may provide an indication to the analytics consumer about such possible improvement, but let the analytics consumer send a new request based on updated flight corridor(s).

In some examples, the one or more inputs may comprise one or more of the following:
- Policy data, for example from a PCF. The policy data may be used to verify policies related to service area restriction, RAT frequency selection policies, and policies related to PDU sessions of the UE;
- Load information, such as a current or predicted load of the one or more RAN nodes and/or 5GC nodes covering the one or more flight paths and/or serving the aerial UE along the one or more flight paths;
- Information indicating a historical load pattern of the one or more RAN nodes and/or 5GC nodes covering the one or more flight paths and/or serving the aerial UE along the one or more flight paths;
- Aerial UE radio conditions and/or radio coverage through the flight path, including historical, current, and/or predicted radio conditions and/or coverage;
- Event information, including information associated with one or more events and alarms generated by the one or more RAN nodes and/or 5GC nodes covering the flight path;
- Measurement information, such as Minimization of Drive Test (MDT) data, for example MDT data related to RSRPs, RSRQs, RLF, RACF of cell(s) and UE location information;
- Mobility information, such as inter/intra-RAT hand-over events configurations, expected inter/intra-RAT hand-over rates and hand-over success rates;
- Network topology information, such as micro/macro cells, FR, Beams etc.; and
- Radio connectivity options with respect to UAV height e.g. cell availability, radio beam availability, dual cell connectivity, supported MIMO modes etc. Different UAV heights may enable the UAV to have different connectivity options.

At step 604, the analytics function determines a projected quality of service along the flight path. The determination may be based on the collected inputs.

At step 606, the analytics function provides an output to the USS/UTM via NEF with information indicating the projected service quality per flight path.

When the service quality check request indicates that one of the one or more expected response parameters are a YES/NO answer, the output to the USS/UTM comprises an indication of whether the requested service quality on the flight path can be met.

Additionally or alternatively, the output to the USS/UTM may comprise one or more of the following:
- A list of flight path(s) where the requested service quality (which may be a combination of service QoS and/or service reliability) can be met. The analytics function/service may associate an order of preference/ranking for each flight path/flight corridor where the service quality can be met. The ranking may for example indicate, from the network's perspective, where a better service quality may be provided;
- Projected/predicted QoS and reliability for a flight path and/or flight path segment. In some examples, this may be in the form of a matrix for a time window covering the estimated time of the UAV passing a cell that is covering the 3D way point(s) of a flight path;
- Information regarding flight path segment(s) that might see service quality degradation at a specific time, for example due to high load during peak hour traffic; and
- An indication that the predicted service quality is too low, such that a flight path needs adjustment.

In some examples, the information included in the output to the USS/UTM may comprise an indication of a confidence in the prediction of a value. For example, a predicted QoS may be associated with a value indicating the confidence in the predicted QoS value.

At step 608, the USS/UTM selects a flight path based on the output received from the analytics function. The USS/UTM then informs the UAV of the selected flight path.

At step 610, the USS/UTM may subscribe to the analytics function for further event notification, for example when the service quality changes (e.g. degrades) or is expected to change. The subscription may be for the selected flight path for the UAV.

A new analytics ID (=Service Quality Monitoring along a flight corridor) may be exposed by the analytics function via the NEF for this purpose. The inputs for the analytics event subscription may include one or more of a 3GPP UE ID (e.g. GPSI or Group Id), Flight path(s) or flight path segment(s) (in 3D way points and time), expected/required service quality, etc.

In some examples, the USS/UTM may subscribe to such analytics event notifications only for a part of the total flight path, e.g. only the next immediate "n" number of flight path segments or the flight path segments that will be traversed/entered by the UAV in next "T" time or when a UAV flight path is within a particular geographical area or the network conditions fall below a given performance threshold(s).

At step 612, the USS/UTM may periodically update the subscription based on current location of the UAV. The analytics function, in some examples, may not need to analyse service quality in the past locations - instead, analysis may be needed for remaining path from current location.

The USS/UTM may periodically update the subscription when it finds that the UAV is approaching a flight path/flight corridor cross-junction where it is possible to alter the flight path. If a partial segment of the total flight path was subscribed earlier, the USS may update the subscription with the next flight path segment(s) when the UAV has reached or is approaching the last flight segment.

In some examples, the analytics function may determine a current or projected/predicted service degradation in a monitored path segment during the time the UAV is expected to pass this segment.

As shown by step 614 in Figure 6, the analytics function may report the service quality change, such as service quality degradation (current or predicted) to the USS/UTM (via NEF). The report may contain information indicating the expected service quality degradation, such as the impacted area and time, the level of reliability degradation, QoS change, etc. The report may also contain information about adjacent areas or UAV height or UTC time schedule supporting the USS/UTM to possibly alter the flight path to avoid the impacted area.

At step 616, based on the reports received from the analytics function, the USS/UTM determines whether it is possible to alter the UAVs flight path or flying conditions (i.e. height or time schedule, such as UTC time) to reach the same destination.

The USS/UTM may repeat steps 600 to 606 to determine an alternate flight path for the UAV. Alternatively, NWDAF can keep on sending the notification whenever there is a projected service quality change.

The USS/UTM then instructs the UAV to alter its flight path and/or flying conditions based on the determination.

At step 618, the USS/UTM may update the subscription to the analytics function/service based on the new path selected. Steps 610 to 616 may then be repeated.

Thus, some examples have been described, whereby an entity (e.g. USS/UTM) responsible for managing a UAV may obtain, from an analytics function, a predicted quality of service for the UAV along a plurality of flight paths. The entity may then select or adjust a flight path of the UAV according to the received information. As such, some examples may enable the entity to select a flight path which has a highest probability of maintaining an acceptable quality of service to the UAV. Thus, some examples may improve the reliability and operability of a UAV supported by a communications network.

It should be noted that, while some of the examples given here are for a UAV flight path, any type of path and/or any type of vehicle could use the analytics described herein. That is to say, in some examples, the flight path may be a path of movement for a vehicle.

It should also be noted that, while examples have been described with reference to a vehicle, the examples may also apply to more than one vehicle. That is to say, the vehicle described herein may encompass one or more vehicles.

In some examples, the method described above in relation to the USS/UTM of Figure 6 may be implemented by a management function (such as a USS or UTM) or an apparatus in the management function. The method described above in relation to the NWDAF/MDAS of Figure 6 may be implemented by an analytics function (such as a NWDAF or MDAS) or an apparatus in the analytics function.

In some examples, there is provided an apparatus comprising sending, to an analytics function, a request for a service quality prediction along at least one movement path of a vehicle; receiving, from the analytics function, information indicating at least one predicted service quality for the vehicle along the at least one movement path; and selecting, based on the received information, a vehicle movement path.

In some examples, the apparatus may comprise at least one processor and at least one memory including a computer program code, the at least one memory and computer program code configured to, with the at least one processor, cause the apparatus at least to: send, to an analytics function, a request for a service quality prediction along at least one movement path of a vehicle; receive, from the analytics function, information indicating at least one predicted service quality for the vehicle along the at least one movement path; and select, based on the received information, a vehicle movement path.

In some examples, there is provided an apparatus comprising means for: receiving, from a management function configured to manage a vehicle, a request for a service quality prediction along at least one movement path of a vehicle; determining a predicted service quality for the vehicle along the at least one movement path; and sending, to the management function, information indicating the predicted service quality for the vehicle along the at least one movement path.

In some examples, the apparatus may comprise at least one processor and at least one memory including a computer program code, the at least one memory and computer program code configured to, with the at least one processor, cause the apparatus at least to: receive, from a management function configured to manage a vehicle, a request for a service quality prediction along at least one movement path of a vehicle; determine a predicted service quality for the vehicle along the at least one movement path; and send, to the management function, information indicating the predicted service quality for the vehicle along the at least one movement path.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising means for:
sending (600), to an analytics function, a request for a service quality prediction along at least one movement path of a unmaned aerial vehicle (UAV), the service quality prediction indicative of a service quality related to acceptable level of connectivity service provided by a communication network for a service to be provided to the UAV along the at least one movement path;
receiving (606), in response to said request and from the analytics function, information indicating at least one predicted service quality for the UAV along the at least one movement path;
selecting (608), based on the received information, a vehicle movement path of the UAV;
**characterised by**
sending (610), to the analytics function, a subscription request for updated information indicating the at least one predicted service quality for the UAV along the selected vehicle movement path;
receiving (614), from the analytics function, the updated information based on the subscription request; and
adjusting (616) the vehicle movement path based on the updated information that is received.

2. The apparatus of claim 1, wherein the at least one movement path consists of a first movement path, and wherein the selecting comprises selecting the first movement path as the vehicle movement path.

3. The apparatus of any preceding claim, wherein the request comprises information indicating one or more of:
the at least one movement path of the UAV;
minimum service requirements for the UAV, the minimum service requirements comprise at least one of a minimum quality of service requirement and a minimum service reliability requirement;
timing information indicating a scheduled time for the UAV to move along the at least one movement path;
one or more expected response parameters;
that the movement paths can be further split into a plurality of smaller movement paths;
the mode of operation among a group of UAVs including the UAV; and
one or more services that the UAV is enabled to use.

4. The apparatus of claim 3, wherein the request comprises information indicating that the at least one movement path can be further split into the plurality of smaller movement paths, and wherein the information indicating the predicted service quality comprises information indicating a predicted service quality along the plurality of smaller movement paths.

5. The apparatus of any preceding claim, wherein the information indicating the at least one predicted service quality for the UAV comprises one or more of:
an indication of whether a required service quality can be met for the at least one movement path;
information indicating at least one of the at least one movement path along which the required service quality can be met;
a predicted service quality change for at least a segment of one of the at least one movement path;
an indication that the required service quality cannot be met for at least a segment of one of the at least one movement path;
information indicating adjustments to one or more of the at least one movement path such that a required service quality can be met.

6. An apparatus comprising means for:
receiving (600), from a management function configured to manage a UAV, a request for a service quality prediction along at least one movement path of a UAV, the service quality prediction indicative of a service quality related to acceptable level of connectivity service provided by a communication network for a service to be provided to the UAV along the at least one movement path;
determining (604), in response to said receiving a request, a predicted service quality for the UAV along the at least one movement path; and
sending (606), to the management function, information indicating the predicted service quality for the UAV along the at least one movement so that the management function selects a vehicle movement path of the UAV;
**characterised by**
receiving (610), from the management function, a subscription request for updated information indicating the at least one predicted service quality for the UAV along the selected vehicle movement path; and
sending (614), to the management function, the updated information based on the subscription request.

7. The apparatus of claim 6, wherein the request comprises information indicating one or more of:
the at least one movement path of the UAV;
minimum service requirements for the UAV, the minimum service requirements comprising at least one of a minimum quality of service requirement and a minimum service reliability requirement;
timing information indicating a scheduled time for the UAV to move along the at least one movement path;
one or more expected response parameters;
that the at least one movement path can be further split into a plurality of smaller movement paths;
the mode of operation among a group of UAVs including the UAV; and
one or more services that the UAV is enabled to use.

8. The apparatus of claim 6, wherein the request comprises information indicating that the at least one movement path can be further split into a plurality of smaller movement paths, and wherein the means is for:
splitting the at least one movement path into the plurality of smaller movement paths,
and wherein the information indicating the predicted service quality comprises information indicating a predicted service quality along the plurality of smaller movement paths.

9. The apparatus of any of claims 6 to 8, wherein the means is for collecting from one or more network nodes one or more of:
policy information associated with the UAV;
load information associated with the one or more network nodes;
information indicating one or more vehicle conditions;
radio coverage information along the at least one movement path of the UAV;
event information associated with the one or more network nodes;
measurement information obtained by the one or more network nodes;
mobility information along the at least one movement path of the UAV;
network topology information; and
radio connectivity information associated with a height of the UAV
wherein the one or more network nodes are determined based on the at least one movement path of the UAV.

10. The apparatus of any of claims 6 to 9, wherein the information indicating the predicted service quality for the UAV comprises one or more of:
an indication of whether a required service quality can be met for the at least one movement path;
information indicating at least one of the at least one movement path along which the required service quality can be met;
a predicted service quality change for at least a segment of one of the at least one movement path; and
an indication that the required service quality cannot be met for at least a segment of one of the at least one movement path.

11. A method comprising:
sending (600), to an analytics function, a request for a service quality prediction along at least one movement path of a UAV, the service quality prediction indicative of a service quality related to acceptable level of connectivity service provided by a communication network for a service to be provided to the UAV along the at least one movement path;
receiving (606), in response to said request and from the analytics function, information indicating at least one predicted service quality for the UAV along the at least one movement path;
selecting (608), based on the received information, a vehicle movement path of the UAV;
**characterised by**
sending (610), to the analytics function, a subscription request for updated information indicating the at least one predicted service quality for the UAV along the selected vehicle movement path;
receiving (614), from the analytics function, the updated information based on the subscription request; and
adjusting (616) the vehicle movement path based on the updated information that is received.

12. A method comprising:
receiving (600), from a management function configured to manage a UAV, a request for a service quality prediction along at least one movement path of a UAV, the service quality prediction indicative of a service quality related to acceptable level of connectivity service provided by a communication network for a service to be provided to the UAV along the at least one movement path;
determining (604) a predicted service quality for the UAV along the at least one movement path;
sending (606), to the management function, information indicating the predicted service quality for the UAV along the at least one movement so that the management function selects a vehicle movement path of the UAV;
**characterised by**
receiving (610), from the management function, a subscription request for updated information indicating the at least one predicted service quality for the UAV along the selected vehicle movement path; and
sending (614), to the management function, the updated information based on the subscription request.

13. A computer readable medium comprising program instructions, which when executed by an apparatus, cause the apparatus to perform:
sending (600), to an analytics function, a request for a service quality prediction along at least one movement path of a UAV, the service quality prediction indicative of a service quality related to acceptable level of connectivity service provided by a communication network for a service to be provided to the UAV along the at least one movement path;
receiving (606), in response to said request and from the analytics function, information indicating at least one predicted service quality for the UAV along the at least one movement path;
selecting (608), based on the received information, a vehicle movement path of the UAV;
**characterised by**
sending (610), to the analytics function, a subscription request for updated information indicating the at least one predicted service quality for the UAV along the selected vehicle movement path;
receiving (614), from the analytics function, the updated information based on the subscription request; and
adjusting (616) the vehicle movement path based on the updated information that is received.

## Patentansprüche

1. Vorrichtung, umfassend Mittel zum:
Senden (600), an eine Analysefunktion, einer Anforderung für eine Dienstqualitätsvorhersage entlang mindestens eines Bewegungspfads eines unbemannten Luftfahrzeugs (UAV), wobei die Dienstqualitätsvorhersage auf eine Dienstqualität bezogen auf ein akzeptables Niveau eines Konnektivitätsdienstes hinweist, der von einem Kommunikationsnetz für einen dem UAV entlang des mindestens einen Bewegungspfads bereitzustellenden Dienst bereitgestellt wird;
Empfangen (606), als Antwort auf die genannte Anforderung und von der Analysefunktion, von Informationen, die mindestens eine vorhergesagte Dienstqualität für das UAV entlang des mindestens einen Bewegungspfads anzeigen;
Auswählen (608), auf der Grundlage der empfangenen Informationen, eines Fahrzeugbewegungspfads des UAV;
**gekennzeichnet durch**
Senden (610), an die Analysefunktion, einer Abonnementanforderung für aktualisierte Informationen, die die mindestens eine vorhergesagte Dienstqualität für das UAV entlang des ausgewählten Fahrzeugbewegungspfads anzeigen;
Empfangen (614), von der Analysefunktion, der aktualisierten Informationen auf der Grundlage der Abonnementanforderung; und
Anpassen (616) des Fahrzeugbewegungspfads auf der Grundlage der empfangenen aktualisierten Informationen.

2. Vorrichtung nach Anspruch 1, wobei der mindestens eine Bewegungspfad aus einem ersten Bewegungspfad besteht, und wobei das Auswählen das Auswählen des ersten Bewegungspfads als Fahrzeugbewegungspfad umfasst.

3. Vorrichtung nach einem der vorhergehenden Ansprüche, wobei die Anforderung Informationen umfasst, die eines oder mehrere der folgenden anzeigen:
den mindestens einen Bewegungspfad des UAV;
Mindestdienstanforderungen für das UAV, wobei die Mindestdienstanforderungen mindestens eine von einer Mindestdienstqualitätsanforderung und einer Mindestdienstzuverlässigkeitsanforderung umfassen;
Zeitinformationen, die eine geplante Zeit anzeigen, zu der sich das UAV entlang des mindestens einen Bewegungspfads bewegen soll;
einen oder mehrere erwartete Antwortparameter;
dass die Bewegungspfade weiter in eine Vielzahl von kleineren Bewegungspfaden aufgeteilt werden können;
den Betriebsmodus unter einer Gruppe von UAVs einschließlich des UAV; und
einen oder mehrere Dienste, zu deren Nutzung das UAV berechtigt ist.

4. Vorrichtung nach Anspruch 3, wobei die Anforderung Informationen umfasst, die anzeigen, dass der mindestens eine Bewegungspfad weiter in die Vielzahl von kleineren Bewegungspfaden aufgeteilt werden kann,
und wobei die Informationen, die die vorhergesagte Dienstqualität anzeigen, Informationen umfassen, die eine vorhergesagte Dienstqualität entlang der Vielzahl von kleineren Bewegungspfaden anzeigen.

5. Vorrichtung nach einem der vorhergehenden Ansprüche, wobei die Informationen, die die mindestens eine vorhergesagte Dienstqualität für das UAV anzeigen, eines oder mehrere der folgenden umfassen:
eine Angabe, ob eine erforderliche Dienstqualität für den mindestens einen Bewegungspfad erfüllt werden kann;
Informationen, die mindestens einen des mindestens einen Bewegungspfads anzeigen, entlang dessen die erforderliche Dienstqualität erfüllt werden kann;
eine vorhergesagte Dienstqualitätsänderung für mindestens ein Segment eines des mindestens einen Bewegungspfads;
eine Angabe, dass die erforderliche Dienstqualität für mindestens ein Segment eines des mindestens einen Bewegungspfads nicht erfüllt werden kann;
Informationen, die Anpassungen an einem oder mehreren des mindestens einen Bewegungspfads anzeigen, sodass eine erforderliche Dienstqualität erfüllt werden kann.

6. Vorrichtung, umfassend Mittel zum:
Empfangen (600), von einer zur Verwaltung eines UAV konfigurierten Verwaltungsfunktion, einer Anforderung für eine Dienstqualitätsvorhersage entlang mindestens eines Bewegungspfads eines UAV, wobei die Dienstqualitätsvorhersage auf eine Dienstqualität bezogen auf ein akzeptables Niveau eines Konnektivitätsdienstes hinweist, der von einem Kommunikationsnetz für einen dem UAV entlang des mindestens einen Bewegungspfads bereitzustellenden Dienst bereitgestellt wird;
Bestimmen (604), als Antwort auf den Empfang einer Anforderung, einer vorhergesagten Dienstqualität für das UAV entlang des mindestens einen Bewegungspfads; und
Senden (606), an die Verwaltungsfunktion, von Informationen, die die vorhergesagte Dienstqualität für das UAV entlang des mindestens einen Bewegungspfads anzeigen, sodass die Verwaltungsfunktion einen Fahrzeugbewegungspfad des UAV auswählt;
**gekennzeichnet durch**
Empfangen (610), von der Verwaltungsfunktion, einer Abonnementanforderung für aktualisierte Informationen, die die mindestens eine vorhergesagte Dienstqualität für das UAV entlang des ausgewählten Fahrzeugbewegungspfads anzeigen; und
Senden (614), an die Verwaltungsfunktion, der aktualisierten Informationen auf der Grundlage der Abonnementanforderung.

7. Vorrichtung nach Anspruch 6, wobei die Anforderung Informationen umfasst, die eines oder mehrere der folgenden anzeigen:
den mindestens einen Bewegungspfad des UAV;
Mindestdienstanforderungen für das UAV, wobei die Mindestdienstanforderungen mindestens eine von einer Mindestdienstqualitätsanforderung und einer Mindestdienstzuverlässigkeitsanforderung umfassen;
Zeitinformationen, die eine geplante Zeit anzeigen, zu der sich das UAV entlang des mindestens einen Bewegungspfads bewegen soll;
einen oder mehrere erwartete Antwortparameter;
dass der mindestens eine Bewegungspfad weiter in eine Vielzahl von kleineren Bewegungspfaden aufgeteilt werden kann;
den Betriebsmodus unter einer Gruppe von UAVs einschließlich des UAV; und
einen oder mehrere Dienste, zu deren Nutzung das UAV berechtigt ist.

8. Vorrichtung nach Anspruch 6, wobei die Anforderung Informationen umfasst, die anzeigen, dass der mindestens eine Bewegungspfad weiter in eine Vielzahl von kleineren Bewegungspfaden aufgeteilt werden kann, und wobei die Mittel dienen zum:
Aufteilen des mindestens einen Bewegungspfads in die Vielzahl von kleineren Bewegungspfaden,
und wobei die Informationen, die die vorhergesagte Dienstqualität anzeigen, Informationen umfassen, die eine vorhergesagte Dienstqualität entlang der Vielzahl von kleineren Bewegungspfaden anzeigen.

9. Vorrichtung nach einem der Ansprüche 6 bis 8, wobei die Mittel zum Sammeln von einem oder mehreren Netzwerkknoten eines oder mehrerer der folgenden dienen:
Richtlinieninformationen, die dem UAV zugeordnet sind;
Lastinformationen, die dem einen oder den mehreren Netzwerkknoten zugeordnet sind;
Informationen, die eine oder mehrere Fahrzeugbedingungen anzeigen;
Funkabdeckungsinformationen entlang des mindestens einen vorgeschlagenen Bewegungspfads des UAV;
Ereignisinformationen, die dem einen oder den mehreren Netzwerkknoten zugeordnet sind;
Messinformationen, die von dem einen oder den mehreren Netzwerkknoten erhalten wurden;
Mobilitätsinformationen entlang des mindestens einen Bewegungspfads des UAV;
Netzwerktopologieinformationen; und
Funkkonnektivitätsinformationen, die einer Höhe des UAV zugeordnet sind,
wobei der eine oder die mehreren Netzwerkknoten auf der Grundlage des mindestens einen Bewegungspfads des UAV bestimmt werden.

10. Vorrichtung nach einem der Ansprüche 6 bis 9, wobei die Informationen, die die vorhergesagte Dienstqualität für das UAV anzeigen, eines oder mehrere der folgenden umfassen:
eine Angabe, ob eine erforderliche Dienstqualität für den mindestens einen Bewegungspfad erfüllt werden kann;
Informationen, die mindestens einen des mindestens einen Bewegungspfads anzeigen, entlang dessen die erforderliche Dienstqualität erfüllt werden kann;
eine vorhergesagte Dienstqualitätsänderung für mindestens ein Segment eines des mindestens einen Bewegungspfads; und
eine Angabe, dass die erforderliche Dienstqualität für mindestens ein Segment eines des mindestens einen Bewegungspfads nicht erfüllt werden kann.

11. Verfahren, umfassend:
Senden (600), an eine Analysefunktion, einer Anforderung für eine Dienstqualitätsvorhersage entlang mindestens eines Bewegungspfads eines UAV, wobei die Dienstqualitätsvorhersage auf eine Dienstqualität bezogen auf ein akzeptables Niveau eines Konnektivitätsdienstes hinweist, der von einem Kommunikationsnetz für einen dem UAV entlang des mindestens einen Bewegungspfads bereitzustellenden Dienst bereitgestellt wird;
Empfangen (606), als Antwort auf die genannte Anforderung und von der Analysefunktion, von Informationen, die mindestens eine vorhergesagte Dienstqualität für das UAV entlang des mindestens einen Bewegungspfads anzeigen;
Auswählen (608), auf der Grundlage der empfangenen Informationen, eines Fahrzeugbewegungspfads des UAV;
**gekennzeichnet durch**
Senden (610), an die Analysefunktion, einer Abonnementanforderung für aktualisierte Informationen, die die mindestens eine vorhergesagte Dienstqualität für das UAV entlang des ausgewählten Fahrzeugbewegungspfads anzeigen;
Empfangen (614), von der Analysefunktion, der aktualisierten Informationen auf der Grundlage der Abonnementanforderung; und
Anpassen (616) des Fahrzeugbewegungspfads auf der Grundlage der empfangenen aktualisierten Informationen.

12. Verfahren, umfassend:
Empfangen (600), von einer zur Verwaltung eines UAV konfigurierten Verwaltungsfunktion, einer Anforderung für eine Dienstqualitätsvorhersage entlang mindestens eines Bewegungspfads eines UAV, wobei die Dienstqualitätsvorhersage auf eine Dienstqualität bezogen auf ein akzeptables Niveau eines Konnektivitätsdienstes hinweist, der von einem Kommunikationsnetz für einen dem UAV entlang des mindestens einen Bewegungspfads bereitzustellenden Dienst bereitgestellt wird;
Bestimmen (604) einer vorhergesagten Dienstqualität für das UAV entlang des mindestens einen Bewegungspfads;
Senden (606), an die Verwaltungsfunktion, von Informationen, die die vorhergesagte Dienstqualität für das UAV entlang des mindestens einen Bewegungspfads anzeigen, sodass die Verwaltungsfunktion einen Fahrzeugbewegungspfad des UAV auswählt;
**gekennzeichnet durch**
Empfangen (610), von der Verwaltungsfunktion, einer Abonnementanforderung für aktualisierte Informationen, die die mindestens eine vorhergesagte Dienstqualität für das UAV entlang des ausgewählten Fahrzeugbewegungspfads anzeigen; und
Senden (614), an die Verwaltungsfunktion, der aktualisierten Informationen auf der Grundlage der Abonnementanforderung.

13. Computerlesbares Medium, umfassend Programmanweisungen, die, wenn sie von einer Vorrichtung ausgeführt werden, die Vorrichtung veranlassen, Folgendes auszuführen:
Senden (600), an eine Analysefunktion, einer Anforderung für eine Dienstqualitätsvorhersage entlang mindestens eines Bewegungspfads eines UAV, wobei die Dienstqualitätsvorhersage auf eine Dienstqualität bezogen auf ein akzeptables Niveau eines Konnektivitätsdienstes hinweist, der von einem Kommunikationsnetz für einen dem UAV entlang des mindestens einen Bewegungspfads bereitzustellenden Dienst bereitgestellt wird;
Empfangen (606), als Antwort auf die genannte Anforderung und von der Analysefunktion, von Informationen, die mindestens eine vorhergesagte Dienstqualität für das UAV entlang des mindestens einen Bewegungspfads anzeigen;
Auswählen (608), auf der Grundlage der empfangenen Informationen, eines Fahrzeugbewegungspfads des UAV;
**gekennzeichnet durch**
Senden (610), an die Analysefunktion, einer Abonnementanforderung für aktualisierte Informationen, die die mindestens eine vorhergesagte Dienstqualität für das UAV entlang des ausgewählten Fahrzeugbewegungspfads anzeigen;
Empfangen (614), von der Analysefunktion, der aktualisierten Informationen auf der Grundlage der Abonnementanforderung; und
Anpassen (616) des Fahrzeugbewegungspfads auf der Grundlage der empfangenen aktualisierten Informationen.

## Revendications

1. Appareil comprenant des moyens pour :
envoyer (600), à une fonction d'analyse, une requête de prédiction de qualité de service le long d'au moins un trajet de déplacement d'un véhicule aérien sans pilote (UAV), la prédiction de qualité de service étant indicative d'une qualité de service liée à un niveau acceptable de service de connectivité fourni par un réseau de communication pour un service devant être fourni à l'UAV le long dudit au moins un trajet de déplacement ;
recevoir (606), en réponse à ladite requête et de la fonction d'analyse, des informations indiquant au moins une qualité de service prédite pour l'UAV le long dudit au moins un trajet de déplacement ;
sélectionner (608), sur la base des informations reçues, un trajet de déplacement de véhicule de l'UAV ;
**caractérisé par**
envoyer (610), à la fonction d'analyse, une requête d'abonnement pour des informations mises à jour indiquant ladite au moins une qualité de service prédite pour l'UAV le long du trajet de déplacement de véhicule sélectionné ;
recevoir (614), de la fonction d'analyse, les informations mises à jour sur la base de la requête d'abonnement ; et
ajuster (616) le trajet de déplacement de véhicule sur la base des informations mises à jour reçues.

2. Appareil selon la revendication 1, dans lequel ledit au moins un trajet de déplacement consiste en un premier trajet de déplacement, et dans lequel la sélection comprend la sélection du premier trajet de déplacement en tant que trajet de déplacement de véhicule.

3. Appareil selon l'une quelconque des revendications précédentes, dans lequel la requête comprend des informations indiquant un ou plusieurs parmi :
ledit au moins un trajet de déplacement de l'UAV ;
des exigences de service minimum pour l'UAV, les exigences de service minimum comprenant au moins l'une d'une exigence de qualité de service minimum et d'une exigence de fiabilité de service minimum ;
des informations de temps indiquant un temps programmé pour que l'UAV se déplace le long dudit au moins un trajet de déplacement ;
un ou plusieurs paramètres de réponse attendus ;
que les trajets de déplacement peuvent être encore divisés en une pluralité de trajets de déplacement plus petits ;
le mode d'opération parmi un groupe d'UAV incluant l'UAV ; et
un ou plusieurs services que l'UAV est autorisé à utiliser.

4. Appareil selon la revendication 3, dans lequel la requête comprend des informations indiquant que ledit au moins un trajet de déplacement peut être encore divisé en la pluralité de trajets de déplacement plus petits,
et dans lequel les informations indiquant la qualité de service prédite comprennent des informations indiquant une qualité de service prédite le long de la pluralité de trajets de déplacement plus petits.

5. Appareil selon l'une quelconque des revendications précédentes, dans lequel les informations indiquant ladite au moins une qualité de service prédite pour l'UAV comprennent un ou plusieurs parmi :
une indication de si une qualité de service requise peut être satisfaite pour ledit au moins un trajet de déplacement ;
des informations indiquant au moins l'un dudit au moins un trajet de déplacement le long duquel la qualité de service requise peut être satisfaite ;
un changement de qualité de service prédit pour au moins un segment de l'un dudit au moins un trajet de déplacement ;
une indication que la qualité de service requise ne peut pas être satisfaite pour au moins un segment de l'un dudit au moins un trajet de déplacement ;
des informations indiquant des ajustements à un ou plusieurs dudit au moins un trajet de déplacement de sorte qu'une qualité de service requise puisse être satisfaite.

6. Appareil comprenant des moyens pour :
recevoir (600), d'une fonction de gestion configurée pour gérer un UAV, une requête de prédiction de qualité de service le long d'au moins un trajet de déplacement d'un UAV, la prédiction de qualité de service étant indicative d'une qualité de service liée à un niveau acceptable de service de connectivité fourni par un réseau de communication pour un service devant être fourni à l'UAV le long dudit au moins un trajet de déplacement ;
déterminer (604), en réponse à la réception d'une requête, une qualité de service prédite pour l'UAV le long dudit au moins un trajet de déplacement ; et
envoyer (606), à la fonction de gestion, des informations indiquant la qualité de service prédite pour l'UAV le long dudit au moins un trajet de déplacement, de sorte que la fonction de gestion sélectionne un trajet de déplacement de véhicule de l'UAV ;
**caractérisé par**
recevoir (610), de la fonction de gestion, une requête d'abonnement pour des informations mises à jour indiquant ladite au moins une qualité de service prédite pour l'UAV le long du trajet de déplacement de véhicule sélectionné ; et
envoyer (614), à la fonction de gestion, les informations mises à jour sur la base de la requête d'abonnement.

7. Appareil selon la revendication 6, dans lequel la requête comprend des informations indiquant un ou plusieurs parmi :
ledit au moins un trajet de déplacement de l'UAV ;
des exigences de service minimum pour l'UAV, les exigences de service minimum comprenant au moins l'une d'une exigence de qualité de service minimum et d'une exigence de fiabilité de service minimum ;
des informations de temps indiquant un temps programmé pour que l'UAV se déplace le long dudit au moins un trajet de déplacement ;
un ou plusieurs paramètres de réponse attendus ;
que ledit au moins un trajet de déplacement peut être encore divisé en une pluralité de trajets de déplacement plus petits ;
le mode d'opération parmi un groupe d'UAV incluant l'UAV ; et
un ou plusieurs services que l'UAV est autorisé à utiliser.

8. Appareil selon la revendication 6, dans lequel la requête comprend des informations indiquant que ledit au moins un trajet de déplacement peut être encore divisé en une pluralité de trajets de déplacement plus petits, et dans lequel les moyens sont pour :
diviser ledit au moins un trajet de déplacement en la pluralité de trajets de déplacement plus petits,
et dans lequel les informations indiquant la qualité de service prédite comprennent des informations indiquant une qualité de service prédite le long de la pluralité de trajets de déplacement plus petits.

9. Appareil selon l'une quelconque des revendications 6 à 8, dans lequel les moyens sont pour collecter à partir d'un ou plusieurs nœuds de réseau un ou plusieurs parmi :
des informations de politique associées à l'UAV ;
des informations de charge associées audit un ou plusieurs nœuds de réseau ;
des informations indiquant une ou plusieurs conditions de véhicule ;
des informations de couverture radio le long dudit au moins un trajet de déplacement proposé de l'UAV ;
des informations d'événement associées audit un ou plusieurs nœuds de réseau ;
des informations de mesure obtenues par ledit un ou plusieurs nœuds de réseau ;
des informations de mobilité le long dudit au moins un trajet de déplacement de l'UAV ;
des informations de topologie de réseau ; et
des informations de connectivité radio associées à une hauteur de l'UAV
dans lequel ledit un ou plusieurs nœuds de réseau sont déterminés sur la base dudit au moins un trajet de déplacement de l'UAV.

10. Appareil selon l'une quelconque des revendications 6 à 9, dans lequel les informations indiquant la qualité de service prédite pour l'UAV comprennent un ou plusieurs parmi :
une indication de si une qualité de service requise peut être satisfaite pour ledit au moins un trajet de déplacement ;
des informations indiquant au moins l'un dudit au moins un trajet de déplacement le long duquel la qualité de service requise peut être satisfaite ;
un changement de qualité de service prédit pour au moins un segment de l'un dudit au moins un trajet de déplacement ; et
une indication que la qualité de service requise ne peut pas être satisfaite pour au moins un segment de l'un dudit au moins un trajet de déplacement.

11. Procédé comprenant :
envoyer (600), à une fonction d'analyse, une requête de prédiction de qualité de service le long d'au moins un trajet de déplacement d'un UAV, la prédiction de qualité de service étant indicative d'une qualité de service liée à un niveau acceptable de service de connectivité fourni par un réseau de communication pour un service devant être fourni à l'UAV le long dudit au moins un trajet de déplacement ;
recevoir (606), en réponse à ladite requête et de la fonction d'analyse, des informations indiquant au moins une qualité de service prédite pour l'UAV le long dudit au moins un trajet de déplacement ;
sélectionner (608), sur la base des informations reçues, un trajet de déplacement de véhicule de l'UAV ;
**caractérisé par**
envoyer (610), à la fonction d'analyse, une requête d'abonnement pour des informations mises à jour indiquant ladite au moins une qualité de service prédite pour l'UAV le long du trajet de déplacement de véhicule sélectionné ;
recevoir (614), de la fonction d'analyse, les informations mises à jour sur la base de la requête d'abonnement ; et
ajuster (616) le trajet de déplacement de véhicule sur la base des informations mises à jour reçues.

12. Procédé comprenant :
recevoir (600), d'une fonction de gestion configurée pour gérer un UAV, une requête de prédiction de qualité de service le long d'au moins un trajet de déplacement d'un UAV, la prédiction de qualité de service étant indicative d'une qualité de service liée à un niveau acceptable de service de connectivité fourni par un réseau de communication pour un service devant être fourni à l'UAV le long dudit au moins un trajet de déplacement ;
déterminer (604) une qualité de service prédite pour l'UAV le long dudit au moins un trajet de déplacement ;
envoyer (606), à la fonction de gestion, des informations indiquant la qualité de service prédite pour l'UAV le long dudit au moins un trajet de déplacement, de sorte que la fonction de gestion sélectionne un trajet de déplacement de véhicule de l'UAV ;
**caractérisé par**
recevoir (610), de la fonction de gestion, une requête d'abonnement pour des informations mises à jour indiquant ladite au moins une qualité de service prédite pour l'UAV le long du trajet de déplacement de véhicule sélectionné ; et
envoyer (614), à la fonction de gestion, les informations mises à jour sur la base de la requête d'abonnement.

13. Support lisible par ordinateur comprenant des instructions de programme, lesquelles, lorsqu'elles sont exécutées par un appareil, amènent l'appareil à effectuer :
envoyer (600), à une fonction d'analyse, une requête de prédiction de qualité de service le long d'au moins un trajet de déplacement d'un UAV, la prédiction de qualité de service étant indicative d'une qualité de service liée à un niveau acceptable de service de connectivité fourni par un réseau de communication pour un service devant être fourni à l'UAV le long dudit au moins un trajet de déplacement ;
recevoir (606), en réponse à ladite requête et de la fonction d'analyse, des informations indiquant au moins une qualité de service prédite pour l'UAV le long dudit au moins un trajet de déplacement ;
sélectionner (608), sur la base des informations reçues, un trajet de déplacement de véhicule de l'UAV ;
**caractérisé par**
envoyer (610), à la fonction d'analyse, une requête d'abonnement pour des informations mises à jour indiquant ladite au moins une qualité de service prédite pour l'UAV le long du trajet de déplacement de véhicule sélectionné ;
recevoir (614), de la fonction d'analyse, les informations mises à jour sur la base de la requête d'abonnement ; et
ajuster (616) le trajet de déplacement de véhicule sur la base des informations mises à jour reçues.
